# FASCICULE DE BREVET EUROPEEN

(11) **EP 1 244 050 B1**
(45) Date de publication et mention de la délivrance du brevet: **28.01.2009**
(21) Numéro de dépôt: 01870059.1
(22) Date de dépôt: 23.03.2001
(51) Int. Cl.: G06K 7/00, G07F 7/08

(54) **Procédé et dispositif de sauvegarde d'applications**
Verfahren und Vorrichtung zur Abspeicherung von Anwendungsprogrammen
Process and device for saving of applications

(43) Date de publication de la demande: 25.09.2002
(73) Titulaire: PROTON WORLD INTERNATIONAL en abrégé PWI, 1930 Zaventem (BE)
(72) Inventeur: Van Assche, Gilles, 1030 Bruxelles (BE)
(74) Mandataire: Schmitz, Yvon

(56) Documents cités:
- EP-A- 0 854 454
- GB-A- 2 282 683
- US-A- 4 877 947
- US-A- 5 434 395

## Description

La présente invention concerne un procédé de transfert sécurisé de données d'un premier support de données, notamment une carte à puce, à un second support de données, notamment une autre carte à puce.

Par exemple, lorsqu'un support de données doit être échangé, (par exemple pour des motifs techniques ou simplement parce qu'une nouvelle génération est mise en circulation), le détenteur d'un tel support à remplacer peut souhaiter que soient conservées des données qui y sont mémorisées et donc que celles-ci soient transférées dans le support de données de remplacement. Plusieurs contraintes s'appliquent à ce genre de transfert de données :
- le transfert ne peut avoir lieu qu'une fois. Un dédoublement des données est absolument interdit, en particulier lorsqu'elles concernent une valeur (monétaire),
- le transfert des données doit être exécuté de manière à ce que leurs intégrité et intégralité soient garanties,
- des données confidentielles doivent être transférées d'une manière sûre. Personne ne peut lire les données confidentielles pendant cette opération.

Le document EP-0-854-454 propose une mise à jour sécurisée de soldes bancaires dans deux cartes différentes et propose ainsi une sélection d'un module auxiliaire, mis en communication avec un premier support de données avec authentification réciproque, la copie du lot de données sélectionnées du premier support dans le module auxiliaire, puis leur effacement dans le premier support avec confirmation suite à une commande données par le module auxiliaire, et enfin une mise en communication avec le second support de données avec authentification réciproque. Cependant, il n'y a pas de copie du lot de données sélectionnées et mémorisées dans le module auxiliaire dans le second support: le module auxiliaire envoie une commande d'addition du montant de ladite transaction, le solde bancaire inscrit sur le premier support et mémorisé dans le module auxiliaire n'est pas copié dans le second support et ainsi le document EP-0-854-454 ne divulgue pas un procédé sécurisé de transfert de données d'un premier support de données à un second support de données.

US-5-434-395 propose un transfert de données d'un premier support de données à un second support de données avec effacement des données du premier support. Cependant ces données ne sont pas copiées de manière intermédiaire dans un module auxiliaire, il n'y a pas de commande d'effacement donnée par le module auxiliaire au premier support et il n'y a pas d'authentification réciproque entre le module auxiliaire et le premier et second support.

Pour résoudre le problème exposé ci-dessus, la présente invention propose le procédé de transfert sécurisé, décrit dans la revendication 1, ainsi que le dispositif décrit dans la revendication 10.

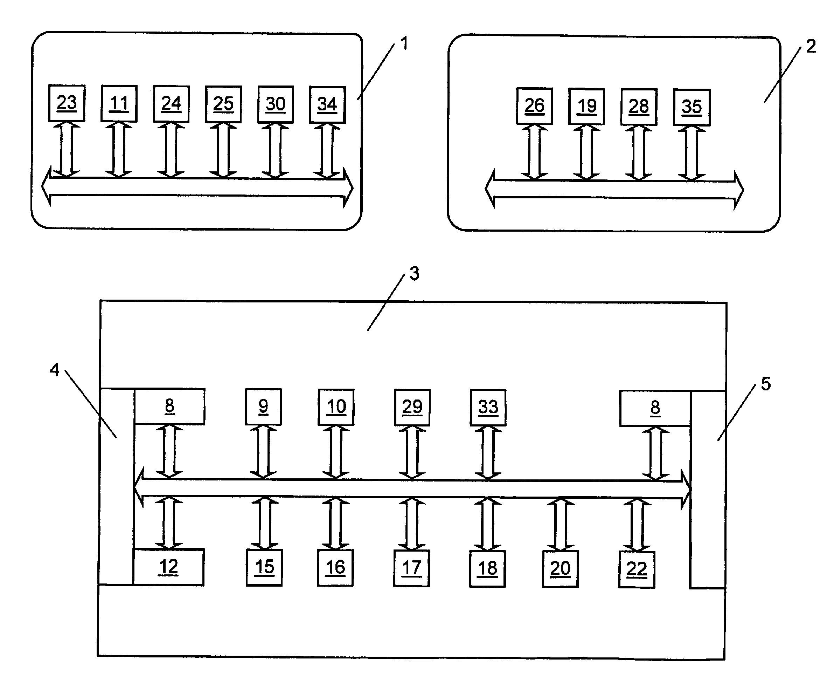

D'autres détails et particularités de l'invention ressortiront des revendications secondaires et de la description du dessin annexé qui illustre, à titre d'exemple non limitatif, le procédé et une forme de réalisation du dispositif suivant l'invention, en particulier dans le cadre de cartes à puce.

La figure unique montre schématiquement les blocs fonctionnels nécessaires au dispositif de l'invention, ceux connus de l'homme de métier pour la mise en oeuvre de l'invention étant omis.

Le dispositif de transfert sécurisé de données mémorisées dans une première carte à puce 1 pour les mémoriser dans une seconde carte à puce 2, sans que les deux cartes ne puissent contenir simultanément des mêmes données, peut comporter une module auxiliaire 3 qui est agencé pour pouvoir être mis en communication fonctionnelle avec l'une et l'autre desdites cartes. Dans la suite, le terme "carte" désignera une carte à puce ou tout objet portable ou support de données pouvant mémoriser des données et il est compris que la première carte a la référence 1 et la seconde la référence 2.

Deux cas peuvent se présenter. Soit le module auxiliaire 3 ne comporte qu'un seul emplacement 4 pour mettre successivement en communication les cartes 1 et 2, soit le module auxiliaire 3 comporte un emplacement 4 pour mettre en communication la carte 1 et un emplacement 5 distinct pour mettre en communication la carte 2.

Le module auxiliaire 3 de l'invention comporte divers moyens reliés fonctionnellement entre eux et connus en tant que tels de l'homme du métier. Ceux à prendre présentement en considération sont :
- des moyens 8, disposés à l'emplacement 4 ou aux emplacements 4 et 5 pour la mise en communication avec les cartes 1, 2,
- des moyens 9 d'authentification réciproque entre le module auxiliaire 3 et respectivement les cartes 1 et 2 (ces moyens 9 peuvent être distincts pour la carte 1 et la carte 2),
- des moyens 10 pour sélectionner dans une mémoire 11 de la carte 1 des données à transférer,
- des moyens 12 pour lire dans la carte 1 les données sélectionnées,
- une mémoire 15 pour mémoriser les données sélectionnées lues,
- des moyens 16 pour commander à la carte 1 d'effacer ses données sélectionnées lues,
- des moyens 17 pour recevoir de la carte 1 une confirmation d'effacement des données sélectionnées lues,
- des moyens 18 pour écrire dans une mémoire 19 de la carte 2 les données sélectionnées lues,
- des moyens 20 pour recevoir de la carte 2 un accusé de réception des données sélectionnées écrites, et
- des moyens 22 pour effacer de sa mémoire 15 les données sélectionnées écrites.

Ladite carte 1 comporte des moyens connus en soi comme :
- des moyens 23 d'authentification réciproque avec le module auxiliaire 3,
- la mémoire 11 précitée, pour des données,
- des moyens 24 d'effacement des données sélectionnées,
- des moyens 25 pour confirmer au module auxiliaire 3 l'effacement des données sélectionnées.

La carte 2 comporte de son côté des moyens, également connus en soi, comme :
- des moyens 26 d'authentification réciproque avec le module auxiliaire 3,
- la mémoire 19 pour des données,
- des moyens 28 pour envoyer au module auxiliaire 3 un accusé de réception des données sélectionnées.

Le dispositif suivant l'invention peut comporter de plus des moyens 29 de vérification de l'intégralité et de l'intégrité des données transmises de la carte 1 au module auxiliaire 3 et de celui-ci à la carte 2. Ces moyens 29 sont disposés de préférence dans le module auxiliaire 3 mais peuvent être répartis d'une manière ou d'une autre entre les cartes 1, 2 et le module auxiliaire 3. Les moyens 29 peuvent être distincts pour la carte 1 et la carte 2.

Un moyen 30 de blocage d'autres ou des autres fonctions de la carte 1 peut y être agencé pour recevoir une commande de blocage du module auxiliaire 3.

Un moyen 33 peut être prévu, et agencé de préférence dans le module auxiliaire 3, pour repérer des données confidentielles dans le lot de données sélectionnées dans la carte 1. Il est disposé alors, de préférence dans cette carte 1, un moyen 34 pour le chiffrement de ces données confidentielles avant leur lecture par le module auxiliaire 3 et il est disposé, de préférence dans la carte 2, un moyen 35 pour le déchiffrement de ces données confidentielles après leur copie dans celui-ci.

Le procédé de l'invention est décrit à présent, à titre d'exemple non limitatif, au moyen du dispositif de l'invention décrit ci-dessus, et à la manière d'un mode opératoire de celui-ci. Les liaisons et interactions entre les différents moyens et composants des cartes 1 et 2 et du module auxiliaire 3 découlent aussi des explications suivantes.

Ce procédé de transfert sécurisé de données depuis une mémoire 11 d'un premier support de données ou carte 1 dans une mémoire 19 d'un second support de données ou carte 2 comporte, outre une sélection d'un module auxiliaire 3 du genre décrit ci-dessus, des étapes dont l'ordre préféré est le suivant.

Pour un transfert, la carte 1 peut être mise en communication avec le module auxiliaire 3, notamment à l'emplacement 4 de celui-ci, prévu à cet effet et comprenant les moyens de mise en communication 8 appropriés équipés pour de la lecture et de l'écriture de données.

Une authentification réciproque est effectuée entre la carte 1 et le module auxiliaire 3 par les moyens d'authentification 9 et respectivement 23.

Une sélection d'un lot de données à transférer de la carte 1 au module auxiliaire 3 a été éventuellement faite au préalable, par exemple à la création de la carte 1, ou est faite à présent à l'aide de moyens de sélection 10, tel qu'un clavier.

S'il y a accord entre les moyens d'authentification réciproque 23 et 9, respectivement de la carte 1 et du module auxiliaire 3, celui-ci copie dans sa mémoire 15, par ses moyens de lecture 12, le lot de données sélectionnées dans la mémoire 11.

Lorsque la copie est terminée, le module auxiliaire 3 donne à la carte 1, par un moyen de commande 16 qu'il comporte, un ordre d'effacer dans la mémoire 11 les données qu'il y a copiées. A la réception de cet ordre, les moyens d'effacement 24 de la carte 1 exécutent l'effacement desdites données sélectionnées. Des moyens de confirmation 25 de la carte 1 signalent aux moyens de réception 17 du module auxiliaire 3 que l'effacement a été effectué.

On considérera comme équivalent technique d'un effacement de données une simple invalidation de celles-ci pour les rendre inaccessibles à l'utilisateur de la carte 1 ou à tout tiers non autorisé, tout en les y conservant.

La communication entre le module auxiliaire 3 et la carte 1 peut être interrompue à ce moment, par exemple en retirant la carte 1.

Le module auxiliaire 3 peut être mis à présent en communication avec la seconde carte 2, notamment parce que celle-ci doit remplacer la carte 1 périmée. A cet effet, la carte 2 est placée, suivant le cas, à l'emplacement 4, ou à l'emplacement 5 équipé aussi de moyens de mise en communication 8 appropriés. Les moyens 8 de l'emplacement 4 peuvent différer fonctionnellement des moyens 8 de l'emplacement 5 en fonction des opérations différentes à effectuer à tel ou tel emplacement 4,5.

Si les moyens d'authentification réciproque 26 et 9 de la carte 2 et respectivement du module auxiliaire 3 sont en accord, les moyens d'écriture 18 de celui-ci écrivent dans la mémoire 19 de la carte 2 le lot de données sélectionnées de la carte 1 et mémorisées dans la mémoire 15 du module auxiliaire 3. Lorsque cette écriture est terminée, les moyens d'envoi 28 de la carte 2 envoient un accusé de réception dudit lot de données.

Lorsque les moyens de réception 20 de la carte 2 reçoivent cet accusé de réception du module auxiliaire 3, les moyens d'effacement 22 de celui-ci effacent dans sa mémoire 15 le lot de données sélectionnées qui s'y trouve.

Une variante préférée de l'invention prévoit que les données lues dans la mémoire 15 pour leur écriture dans la mémoire 19 sont immédiatement effacées de la mémoire 15 après leur lecture et avant de recevoir un quelconque accusé de réception de la carte 2, de manière à ce que, si la carte 2 était retirée prématurément du module auxiliaire 3, ces données ne puissent plus être reproduites.

Le procédé décrit empêche ainsi que les deux cartes 1 et 2 puissent contenir simultanément de mêmes données utilisables et que celles-ci puissent subsister dans le module auxiliaire 3 et être réutilisées.

Ledit procédé peut comporter de préférence, après une étape de copie ou écriture dans le module auxiliaire 3 et/ou dans la mémoire 19, une vérification de l'intégralité et de l'intégrité des données transmises. Cette vérification est effectuée par les moyens 29 précités. Une vérification non réussie peut être signalée et/ou arrêter le processus, et/ou le faire recommencer au moins en partie entre les mémoires concernées.

Le procédé proposé peut encore comporter, avant la copie dans la mémoire 15 du module auxiliaire 3, un blocage d'autres fonctions ou mémoires ou parties de mémoire de la carte 1, ce blocage étant commandé par un moyen de blocage 30 du module auxiliaire 3.

Le procédé suivant l'invention peut encore comporter un repérage de données confidentielles dans le lot de données sélectionnées, par ledit moyen de repérage 33. Dans ce cas, le moyen de chiffrement 34 effectue un chiffrement de ces données confidentielles dans la carte 1 avant qu'elles soient copiées dans le module auxiliaire 3. Un déchiffrement de ces données confidentielles chiffrées est alors effectué dans la carte 2, après leur copie dans celle-ci, par le moyen de déchiffrement 35.

Il doit être entendu que l'invention n'est nullement limitée aux formes et modes de réalisation décrits et que bien des modifications peuvent y être apportées sans sortir du cadre des revendications.

Ainsi, le procédé peut comporter avant l'étape de copie dans la carte 2, de préférence après l'étape d'effacement dans la carte 1, un traitement des données du lot pour les adapter à la carte 2. Ce traitement peut consister à condenser les données du lot de manière à les rendre compréhensives pour la carte 2 qui peut être d'une nouvelle génération par rapport à la carte 1.

Dans le cas de données chiffrées contenues dans la carte 1, un autre genre de traitement des données peut consister par exemple à déchiffrer celles-ci dans le module auxiliaire 3 à l'aide de la clé cryptographique utilisée pour la carte 1 et à les chiffrer à l'aide d'une autre clé avant ou à mesure qu'elles sont écrites dans la carte 2.

Le traitement ci-dessus peut aussi servir à rafraîchir ou remettre à un état initial les données sélectionnées d'une carte. La carte 1 est alors d'abord déchargée de ces données dans le module auxiliaire 3 et est ensuite présentée au module auxiliaire 3 en tant que carte 2 pour être rechargée avec des données traitées. Dans un tel cas, la carte 1 comporte de plus toutes les fonctions décrites dans le cadre de l'explication de la carte 2.

Dans une variante de l'invention, pour accéder aux données de la carte 1, celle-ci et le module auxiliaire 3 partagent des clés cryptographiques d'accès mutuel qui sont différentes de celles que partagent la carte 1 et tout autre terminal associable à la carte 1 en cours d'utilisation. De cette manière, le module 3 est la seule entité qui puisse faire une sauvegarde des données choisies de la carte 1 pour clôturer la phase d'utilisation de cette carte 1.

La clôture de la phase d'utilisation doit être une étape irréversible. Pour l'utilisation de ces clés cryptographiques différentes lors de la mise en communication de la carte 1 et du module auxiliaire 3, les clés cryptographiques d'accès mutuel entre la carte 1 et un terminal associable sont mises hors service pour cette carte 1 et ainsi les données choisies (par exemple des valeurs monétaires) ne pourront plus être utilisées par un terminal associable et peuvent être considérées comme annulées.

Du fait de l'irréversibilité de cette étape de clôture, diverses possibilités peuvent être envisagées.

Dans un cas, le module auxiliaire 3 est unique, quitte à être constitué d'un bloc central à mémoire et de multiples moyens de mise en communication 8 disposés à distance de ce bloc central et en liaison constante avec celui-ci de manière à ne pas pouvoir fonctionner de façon autonome. Toute carte 1 mise en communication avec ce module auxiliaire 3 pour une sauvegarde de données dans une seconde carte 2 est répertoriée dans une liste dans la mémoire du bloc central. Une carte 1 présentée une seconde fois à ce module 3 est refusée pour une seconde opération de sauvegarde dans une autre seconde carte 2 des données sélectionnées déjà sauvegardées.

Dans un autre cas, le module auxiliaire 3 est conçu pour donner à la carte 1 l'ordre de clôturer son utilisation, juste avant qu'il n'y lise les données sélectionnées.

Le module auxiliaire 3 peut être conçu pour refuser une carte 1 qui a reçu un ordre de clôture d'utilisation. Un arrachement prématuré de la carte 1, hors du module 3, avant que les données sélectionnées soient lues, a pour conséquence que cette carte 1 est ensuite refusée par le ou un module 3. Une copie des données sélectionnées est ainsi évitée.

Il est à noter qu'une clôture d'utilisation de la carte 1 peut n'être que partielle et limitée au domaine des données sélectionnées ou peut être étendue à quelques ou toutes les opérations auxquelles la carte 1 est destinée.

**Légende des figures**

| Réf. | | Position | | |
|---|---|---|---|---|
| 1 | première carte à puce | 1 | | |
| 2 | seconde carte à puce | | 2 | |
| 3 | module auxiliaire | | | 3 |
| 4 | emplacement pour 1, 2 | | | 3 |
| 5 | emplacement pour 2 | | | 3 |
| 8 | moyens de mise en communication de 1, 2 | | | 3 |
| 9 | moyens d'authentification réciproque entre 3 et 1, 2 | | | 3 |
| 10 | moyens de sélection de données à transférer | | | 3 |
| 11 | mémoire de 1 | 1 | | |
| 12 | moyens de lecture | | | 3 |
| 15 | mémoire de 3 | | | 3 |
| 16 | moyens de commande d'effacement | | | 3 |
| 17 | moyens de réception de confirmation d'effacement | | | 3 |
| 18 | moyens d'écriture | | | 3 |
| 19 | mémoire de 2 | | 2 | |
| 20 | moyens de réception d'un accusé de réception | | | 3 |
| 22 | moyens d'effacement de 3 | | | 3 |
| 23 | moyens d'authentification réciproque dans 1 | 1 | | |
| 24 | moyens d'effacement de 1 | 1 | | |
| 25 | moyens de confirmation d'effacement de 1 | 1 | | |
| 26 | moyens d'authentification réciproque dans 2 | | 2 | |
| 28 | moyens d'envoi d'un accusé de réception de 2 | | 2 | |
| 29 | moyens de vérification d'intégralité et d'intégrité | | | 3 |
| 30 | moyen de blocage de 1 | 1 | | |
| 33 | moyen de repérage de données confidentielles | | | 3 |
| 34 | moyen de chiffrement | 1 | | |
| 35 | moyen de déchiffrement | | 2 | |

## Revendications

1. Procédé de transfert sécurisé de données d'un premier support de données (1), notamment une carte à puce (1), à un second support de données (2), notamment une autre carte à puce (2), comportant
(a) une sélection d'un module auxiliaire (3),
(b) une mise en communication du premier support de données (1) et du module auxiliaire (3),
(c) une authentification réciproque entre le premier support de données (1) et le module auxiliaire (3),
(d) une sélection d'un lot de données à transférer du premier support de données (1) au module auxiliaire (3),
(e) une copie dans le module auxiliaire (3) du lot de données sélectionnées du premier support de données (1),
(f) une commande donnée par le module auxiliaire (3) au premier support de données (1) pour effacer les données copiées,
(g) un effacement desdites données sélectionnées,
(h) une confirmation donnée par le premier support de données (1) au module auxiliaire (3) de ce que l'effacement est effectué,
(i) une rupture de la communication entre le module auxiliaire (3) et le premier support de données (1),
(j) une mise en communication du module auxiliaire (3) et du second support de données (1),
(k) une authentification réciproque entre le second support de données (2) et le module auxiliaire (3),
(l) une copie dans le second support de données (2) du lot de données sélectionnées du premier support de données (1) et mémorisées dans le module auxiliaire (3),
(m) éventuellement un envoi, par le second support de données (2) au module auxiliaire (3), d'un accusé de réception du lot de données,
(n) au reçu de l'accusé de réception par le module auxiliaire (3), un effacement dans sa mémoire dudit lot de données sélectionnées provenant du premier support de données (1).

2. Procédé suivant la revendication 1, **caractérisé en ce que** l'étape (n) précède ou est simultanée à l'étape (m).

3. Procédé suivant la revendication 1, **caractérisé en ce que** l'étape (n) est enclenchée par la réception de l'accusé de réception de l'étape (m).

4. Procédé suivant l'une quelconque des revendications 1 à 3, **caractérisé en ce qu'**il comporte de plus, entre les étapes (e) et (f) et/ou entre les étapes (I) et (m), une vérification de l'intégralité et de l'intégrité des données transmises.

5. Procédé suivant l'une quelconque des revendications 1 à 4, **caractérisé en ce qu'**il comporte, avant l'étape (e), un blocage d'autres fonctions du premier support de données (1) imposé par le module auxiliaire (3).

6. Procédé suivant l'une quelconque des revendications 1 à 5, **caractérisé en ce qu'**il comporte :
- dans le lot de données sélectionnées dans le premier support de données (1), un repérage de données confidentielles,
- un chiffrement de ces données confidentielles avant leur copie dans le module auxiliaire (3), et
- un déchiffrement de ces données confidentielles dans le second support de données (2) après leur copie dans celui-ci.

7. Procédé suivant l'une quelconque des revendications 1 à 6, **caractérisé en ce qu'**il comporte avant l'étape (I), de préférence après l'étape (f), un traitement des données du lot pour les adapter au second support de données (2).

8. Procédé suivant la revendication 7, **caractérisé en ce que** le traitement peut consister à condenser les données du lot de manière à les rendre compréhensives pour le second support de données (2).

9. Procédé suivant la revendication 7, **caractérisé en ce que** le traitement consiste en un déchiffrement des données du premier support (1) chiffrées au moyen d'une clé cryptographique et en un chiffrement de ces données déchiffrées, au moyen d'une autre clé cryptographique, avant ou pendant leur écriture dans le second support (2).

10. Dispositif de transfert sécurisé de données d'un premier support de données (1), notamment une carte à puce (1), à un second support de données (2), notamment une autre carte à puce (2), en particulier pour la mise en oeuvre du procédé suivant l'une quelconque des revendications 1 à 9, le dispositif comportant :
- un module auxiliaire (3) qui est agencé pour pouvoir être mis en communication fonctionnelle avec le premier support de données (1) et avec le second support de données (2), et qui comporte reliés fonctionnellement entre eux:
- des moyens (9) d'authentification réciproque entre le module auxiliaire (3) et respectivement le premier support de données (1) et le second support de données (2),
- des moyens (10) pour sélectionner dans une mémoire (11) du premier support de données (1) des données à transférer,
- des moyens (12) pour lire dans le premier support de données (1) des données sélectionnées,
- une mémoire (15) pour mémoriser les données sélectionnées lues,
- des moyens (16) pour commander au premier support de données (1) d'effacer ses données sélectionnées lues,
- des moyens (17) pour recevoir du premier support de données (1) une confirmation d'effacement des données sélectionnées,
- des moyens (18) pour écrire dans le second support de données (2) les données sélectionnées lues,
- des moyens (20) pour recevoir du second support de données (2) un accusé de réception des données sélectionnées écrites, et
- des moyens (22) pour effacer de sa mémoire (15) les données sélectionnées écrites,
- dans le premier support de données (1),
- des moyens (23) d'authentification réciproque avec le module auxiliaire (3),
- une mémoire (11) pour des données,
- des moyens (24) d'effacement des données sélectionnées,
- des moyens (25) pour confirmer au module auxiliaire (3) l'effacement des données sélectionnées,
- dans le second support de données (2),
- des moyens (26) d'authentification réciproque avec le module auxiliaire (3),
- une mémoire (19) pour des données,
- des moyens (28) pour envoyer au module auxiliaire (3) un accusé de réception des données sélectionnées.

11. Dispositif suivant la revendication 10, **caractérisé en ce qu'**il comporte de plus des moyens (29) de vérification de l'intégralité et de l'intégrité des données transmises du premier support de données (1) au module auxiliaire (3) et du module auxiliaire (3) au second support de données (2).

12. Dispositif suivant l'une ou l'autre des revendications 10 et 11, **caractérisé en ce qu'**il comporte de plus un moyen (30) de blocage d'autres fonctions du premier support de données (1) agencé pour recevoir une commande de blocage du module auxiliaire (3).

13. Dispositif suivant l'une quelconque des revendications 10 à 12, **caractérisé en ce qu'**il comporte de plus :
- un moyen (33) agencé, de préférence dans le module auxiliaire (3), pour repérer des données confidentielles dans le lot de données sélectionnées dans le premier support de données (1),
- disposé de préférence dans le premier support de données (1), un moyen (34) de chiffrement de ces données confidentielles avant leur lecture par le module auxiliaire (3), et
- disposé de préférence dans le second support de données (2), un moyen (35) de déchiffrement de ces données confidentielles après leur copie dans celui-ci.

## Claims

1. Method for the secure transfer of data from a first data carrier (1), in particular a chip card (1), to a second data carrier (2), in particular another chip card (2),
comprising
(a) selection of an auxiliary module (3),
(b) putting the first data carrier (1) and the auxiliary module (3) in communication,
(c) reciprocal authentication between the first data carrier (1) and the auxiliary module (3),
(d) selection of a batch of data to be transferred from the first data carrier (1) to the auxiliary module (3),
(e) copying, into the auxiliary module (3), the batch of data selected from the first data carrier (1),
(f) a command given by the auxiliary module (3) to the first data carrier (1) in order to delete the copied data,
(g) deletion of the said selected data,
(h) confirmation given by the first data carrier (1) to the auxiliary module (3) that the deletion has been carried out,
(i) breaking communication between the auxiliary module (3) and the first data carrier (1),
(j) putting the auxiliary module (3) and the second data carrier (1) in communication,
(k) reciprocal authentication between the second data carrier (2) and the auxiliary module (3),
(l) copying, into the second data carrier (2), the batch of data selected from the first data carrier (1) and stored in the auxiliary module (3),
(m) possibly a sending, by the second data carrier (2) to the auxiliary module (3), an acknowledgement of reception of the batch of data,
(n) when the acknowledgement of reception is received by the auxiliary module (3), a deletion in its memory of the said batch of data selected coming from the first data carrier (1).

2. Method according to claim 1, **characterised in that** step (a) precedes or is simultaneous with step (m).

3. Method according to claim 1, **characterised in that** step (n) is triggered by the reception of the acknowledgment of reception of step (m).

4. Method according to any one of claims 1 to 3, **characterised in that** it also comprises, between steps (c) and (f) and/or between steps (l) and (m), verification of the integrality and integrity of the data transmitted.

5. Method according to any one of claims 1 to 4, **characterised in that** it comprises, before step (e), a blocking of other functions of the first data carrier (1) imposed by the auxiliary module (3).

6. Method according to any one of claims 1 to 5, **characterised in that** it comprises:
- in the batch of data selected in the first data carrier (1), a location of confidential data,
- an enciphering of these confidential data before they are copied into the auxiliary module (3), and
- a deciphering of these confidential data in the second data carrier (2) after they are copied therein.

7. Method according to any one of claims 1 to 6, **characterised in that** it comprises, before step (I), preferably after step (f), a processing of the data of the batch in order to adapt them to the second data carrier (2).

8. Method according to claim 7, **characterised in that** the processing can consist of condensing the data in the batch so as to make them comprehensive for the second data carrier (2).

9. Method according to claim 7, **characterised in that** the processing consists of a deciphering of the data from the first carrier (1) enciphered by means of a cryptographic key and an enciphering of these deciphered data, by means of another cryptographic key, before or during their writing in the second carrier (2).

10. Device for the secure transfer of data from a first data carrier (1), in particular a chip card (1), to a second data carrier (2), in particular another chip card (2), in particular for implementing the method according to any one of claims 1 to 9, the device comprising:
- an auxiliary module (3) that is arranged so as to be able to be put in functional communication with the first data carrier (1) and with the second data carrier (2), and which comprises, functionally connected together:
- means (9) of reciprocal authentication between the auxiliary module (3) and respectively the data carrier (1) and the second data carrier (2),
- means (10) for selecting, in a memory (11) of the first data carrier (1), data to be transferred,
- means (12) for reading selected data in the first data carrier (1),
- a memory (15) for storing the selected data read,
- means (16) for instructing the first data carrier (1) to delete its selected data read,
- means (17) for receiving, from the first data carrier (1), a confirmation of deletion of the selected data,
- means (18) for writing, in the second data carrier (2), the selected data read,
- means (20) for receiving, from the second data carrier (2), an acknowledgement of reception of the selected data written, and
- means (22) for deleting in its memory (15) the selected data written,
- in the first data carrier (1),
- means (23) of reciprocal authentication with the auxiliary module (3),
- a memory (11) for the data,
- means (24) of deleting the selected data,
- means (25) for confirming to the auxiliary module (3) the deletion of the selected data,
- in the second data carrier (2)
- means (26) of reciprocal authentication with the auxiliary module (3),
- a memory (19) for data,
- means (28) for sending to the auxiliary module (3) an acknowledgment of reception of the selected data.

11. Device according to claim 10, **characterised in that** it also comprises means (29) of verifying the integrality and integrity of the data transmitted from the first data carrier (1) to the auxiliary module (3) and from the auxiliary module (3) to the second data carrier (2).

12. Device according to one or other of claims 10 and 11, **characterised in that** it also comprises a means (30) of blocking other functions of the first data carrier (1) arranged to receive a blocking command from the auxiliary module (3).

13. Device according to any one of claims 10 to 12, **characterised in that** it also comprises:
- a means (33) arranged, preferably in the auxiliary module (3), to locate confidential data in the batch of data selected in the first data carrier (1),
- preferably disposed in the first data carrier (1), a means (34) of enciphering these confidential data before they are read by the auxiliary module (3), and
- preferably disposed in the second data carrier (2), a means (35) of deciphering these confidential data after they are copied therein.

## Patentansprüche

1. Verfahren zur gesicherten Übertragung von Daten eines ersten Datenträgers (1), insbesondere einer Chipkarte (1), auf einen zweiten Datenträger (2), insbesondere eine andere Chipkarte (2), umfassend
(a) Auswählen eines Hilfsmoduls (3),
(b) Verbinden des ersten Datenträgers (1) mit dem Hilfsmodul (3),
(c) gegenseitiges Authentifizieren zwischen dem ersten Datenträger (1) und dem Hilfsmodul (3),
(d) Auswählen einer bestimmten Menge an Daten, die vom ersten Datenträger (1) auf das Hilfsmodul (3) zu übertragen sind,
(e) Kopieren in das Hilfsmodul (3) der bestimmten Menge an ausgewählten Daten des ersten Datenträgers (1),
(f) Geben eines Befehls durch das Hilfsmodul (3) für den ersten Datenträger (1), um die kopierten Daten zu löschen,
(g) Löschen der ausgewählten Daten,
(h) Bestätigen durch den ersten Datenträger (1) für das Hilfsmodul (3), dass das Löschen erfolgt ist,
(i) Unterbrechen der Verbindung zwischen dem Hilfsmodul (3) und dem ersten Datenträger (1),
(j) Verbinden des Hilfsmoduls (3) mit dem zweiten Datenträger (1),
(k) gegenseitiges Authentifizieren zwischen dem zweiten Datenträger (2) und dem Hilfsmodul (3),
(l) Kopieren in den zweiten Datenträger (2) der bestimmten Menge an Daten, die aus dem ersten Datenträger (1) ausgewählt und im Hilfsmodul (3) gespeichert wurden,
(m) gegebenenfalls Senden durch den zweiten Datenträger (2) einer Empfangsbestätigung der bestimmten Menge an Daten an das Hilfsmodul (3),
(n) beim Empfang der Empfangsbestätigung durch das Hilfsmodul (3) Löschen in seinem Speicher der bestimmten Menge an ausgewählten Daten, die vom ersten Datenträger (1) stammen.

2. Verfahren nach Anspruch 1, **dadurch gekennzeichnet, dass** Schritt (n) vor Schritt (m) oder gleichzeitig dazu erfolgt.

3. Verfahren nach Anspruch 1, **dadurch gekennzeichnet, dass** Schritt (n) durch den Empfang der Empfangsbestätigung in Schritt (m) eingeleitet wird.

4. Verfahren nach einem der Ansprüche 1 bis 3, **dadurch gekennzeichnet, dass** es ferner zwischen den Schritten (e) und (f) und/oder zwischen den Schritten (l) und (m) eine Überprüfung der Vollständigkeit und der Integrität der übertragenen Daten umfasst.

5. Verfahren nach einem der Ansprüche 1 bis 4, **dadurch gekennzeichnet, dass** es vor Schritt (e) eine Sperrung weiterer Funktionen des ersten Datenträgers (1), die durch das Hilfsmodul (3) auferlegt wird, umfasst.

6. Verfahren nach einem der Ansprüche 1 bis 5, **dadurch gekennzeichnet, dass** es umfasst:
- in der bestimmten Menge an ausgewählten Daten in einem ersten Datenträger (1) eine Kennzeichnung von vertraulichen Daten,
- eine Verschlüsselung dieser vertraulichen Daten vor ihrem Kopieren in das Hilfsmodul (3) und
- eine Entschlüsselung dieser vertraulichen Daten im zweiten Datenträger (2) nach ihrem Kopieren in diesen.

7. Verfahren nach einem der Ansprüche 1 bis 6, **dadurch gekennzeichnet, dass** es vor Schritt (l), vorzugsweise nach Schritt (f), eine Verarbeitung der Daten der bestimmten Menge umfasst, um diese an den zweiten Datenträger (2) anzupassen.

8. Verfahren nach Anspruch 7, **dadurch gekennzeichnet, dass** die Verarbeitung im Kondensieren der Daten der bestimmten Menge derart, dass sie für den zweiten Datenträger (2) verständig werden, besteht.

9. Verfahren nach Anspruch 7, **dadurch gekennzeichnet, dass** die Verarbeitung in einer Entschlüsselung von Daten des ersten Trägers (1), die mittels eines kryptografischen Schlüssels verschlüsselt werden, und in einer Verschlüsselung dieser entschlüsselten Daten mittels eines kryptografischen Schlüssels vor oder während des Schreibens in den zweiten Träger (2) besteht.

10. Vorrichtung zur gesicherten Übertragung von Daten eines ersten Datenträgers (1), insbesondere einer Chipkarte (1), auf einen zweiten Datenträger (2), insbesondere eine andere Chipkarte (2), genauer, um das Verfahren nach einem der Ansprüche 1 bis 9 durchzuführen, wobei die Vorrichtung umfasst:
- ein Hilfsmodul (3), das derart angeordnet ist, um funktionell mit dem ersten Datenträger (1) und dem zweiten Datenträger (2) verbunden zu werden und das dazwischen verbunden umfasst:
- Mittel (9) zum gegenseitigen Authentifizieren zwischen dem Hilfsmodul (3) und jeweils dem ersten Datenträger (1) und dem zweiten Datenträger (2),
- Mittel (10) zum Auswählen von zu übertragenden Daten in einem Speicher (11) des ersten Datenträgers (1),
- Mittel (12) zum Lesen der ausgewählten Daten im ersten Datenträger (1),
- einen Speicher (15) zum Speichern der ausgewählten gelesenen Daten,
- Mittel (16) zum Befehlen, dass der erste Datenträger (1) seine ausgewählten gelesenen Daten löscht,
- Mittel (17) zum Empfangen einer Bestätigung des Löschens der ausgewählten Daten vom ersten Datenträger (1),
- Mittel (18) zum Schreiben der ausgewählten gelesenen Daten in den zweiten Datenträger (2),
- Mittel (20) zum Empfangen einer Empfangsbestätigung der ausgewählten geschriebenen Daten vom zweiten Datenträger (2) und
- Mittel (22) zum Löschen der ausgewählten geschriebenen Daten in seinem Speicher (15),
- im ersten Datenträger (1),
- Mittel (23) zum gegenseitigen Authentifizieren mit dem Hilfsmodul (3),
- einen Speicher (11) für die Daten,
- Mittel (24) zum Löschen der ausgewählten Daten,
- Mittel (25) zum Bestätigen des Löschens der ausgewählten Daten gegenüber dem Hilfsmodul (3),
- im zweiten Datenträger (2),
- Mittel (26) zum gegenseitigen Authentifizieren mit dem Hilfsmodul (3),
- einen Speicher (19) für die Daten,
- Mittel (28) zum Senden einer Empfangsbestätigung der ausgewählten Daten an das Hilfsmodul (3).

11. Vorrichtung nach Anspruch 10, **dadurch gekennzeichnet, dass** sie ferner Mittel (29) zum Überprüfen der Vollständigkeit und der Integrität der Daten umfasst, die vom ersten Datenträger (1) auf das Hilfsmodul (3) und vom Hilfsmodul (3) auf den zweiten Datenträger (2) übertragen werden.

12. Vorrichtung nach einem der Ansprüche 10 und 11, **dadurch gekennzeichnet, dass** sie ferner ein Mittel (30) zum Sperren weiterer Funktionen des ersten Datenträgers (1) umfasst, der derart angeordnet ist, um vom Hilfsmodul (3) einen Sperrungsbefehl zu erhalten.

13. Vorrichtung nach einem der Ansprüche 10 bis 12, **dadurch gekennzeichnet, dass** sie ferner umfasst:
- ein Mittel (33), das derart angeordnet ist, vorzugsweise im Hilfsmodul (3), um die vertraulichen Daten in der bestimmten Menge an ausgewählten Daten im ersten Datenträger (1) zu kennzeichnen,
- vorzugsweise im ersten Datenträger (1) angeordnet, ein Mittel (34) zum Verschlüsseln dieser vertraulichen Daten, bevor sie vom Hilfsmodul (3) gelesen werden, und
- vorzugsweise im zweiten Datenträger (2) angeordnet, ein Mittel (35) zum Entschlüsseln dieser vertraulichen Daten, nachdem sie in diesen kopiert worden sind.
